Europäisches Patentamt

European Patent Office

Office européen des brevets

(19)

(11) EP 0 918 406 A2

(12) **EUROPÄISCHE PATENTANMELDUNG**

(43) Veröffentlichungstag:
26.05.1999 Patentblatt 1999/21

(51) Int. Cl.$^6$: **H04B 10/24**

(21) Anmeldenummer: 98121057.8

(22) Anmeldetag: 06.11.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 19.11.1997 DE 19751182

(71) Anmelder:
Gebr. Merten Gmbh & Co.KG
51674 Wiehl (DE)

(72) Erfinder: **Herbrandt, Wassilij**
**51674 Wiehl (DE)**

(74) Vertreter:
**Selting, Günther, Dipl.-Ing. et al**
**Patentanwälte**
**von Kreisler, Selting, Werner**
**Postfach 10 22 41**
**50462 Köln (DE)**

(54) **Optisches Bidirektionelles Datenübertragungssystem**

(57) Das Datenübertragungssystem weist zwei Sende- und Empfangsstationen (ST1,ST2) auf, die über eine optische Signalstrecke (OS) miteinander verbunden sind. Jede Station enthält einen optischen Sender (S1) und einen optischen Empfänger (E1), die beide mit der optischen Signalstrecke (OS) zusammenwirken und nicht entkoppelt sind. Jede Station enthält in einem Modulator (10) eine Verzögerungseinrichtung (K), die nach Empfang eines Lichtsignals durch die Station den nächsten Sendeimpuls so lange verzögert, bis seit dem Empfang des Lichtsignals eine vorbestimmte Wartezeit verstrichen ist. Auf diese Weise wird verhindert, daß Sende- und Empfangsimpulse in kurzer Folge auftreten und daß die betreffende Station durch ein von ihr ausgesandtes Lichtsignal "blind" ist, während das nächste Empfangssignal auftritt.

FIG.1

**Beschreibung**

Die Erfindung betrifft ein Datenübertragungssystem mit einer optischen Signalstrecke, über die im Duplexbetrieb in beiden Richtungen Lichtimpulse übertragen werden können.

In der Hausleittechnik ist es bekannt, in einem Gebäude ein Bussystem zu verlegen, an das Geräte angeschlossen werden können. Das Bussystem dient dazu, Telegramme zwischen verschiedenen Geräten zu übertragen, beispielsweise Meßwerte, Befehle, Zustandsberichte u.dgl. von einem Gerät zu einem anderen zu übermitteln. Dieses zur Gebäudeinstallation gehörende Bussystem arbeitet mit rein elektrischer Datenübertragung. Die Geräte können an Anschlußstellen des Bussystems angeschlossen werden, die Schnittstellen bilden. Wenn ein elektrisches Gerät, z.B. eine Waschmaschine, an die Hausinstallation angeschlossen wird, ist ein Netzanschluß und ein Datenanschluß erforderlich. Um für beide Anschlüsse ein einziges Kabel verwenden zu können, ist es bekannt, ein Kabel vorzusehen, das elektrische Adern für den Netzanschluß und einen Lichtleiter für die Datenübertragung enthält. Auf diese Weise wird erreicht, daß die Datenübertragung nicht durch Störungen des Netzkabels beeinflußt wird. Die Datenübertragung erfolgt zwischen der Bus-Schnittstelle und dem Gerät, also über eine optische Signalstrecke. Dabei muß ein Datenverkehr in beiden Richtungen über einen einzigen Lichtleiter möglich sein.

Eine Sende- und Empfangsstation, die an das Ende eines Lichtleiters angeschlossen ist, enthält einen Lichtsender und einen Lichtempfänger, die beide mit dem Lichtleiter gekoppelt sind. Dabei tritt der Effekt ein, daß ein erheblicher Teil der Lichtstrahlung, die der Lichtsender aussendet, auf den Lichtempfänger derselben Station fällt. Wenn nicht sehr aufwendige Abschirmmaßnahmen getroffen werden, ist derjenige Lichtanteil, der unbeabsichtigt unmittelbar vor dem Lichtsender auf den Lichtempfänger trifft, größer als der Lichtanteil, der durch das Lichtleiterkabel zur anderen Station gesandt wird.

Wenn ein Lichtsender einer Station einen Lichtimpuls ausgesendet hat, trifft den Lichtempfänger derselben Station Licht von großer Helligkeit. Dies hat zur Folge, daß der Lichtempfänger für eine gewisse Zeit "blind" wird und nicht die relativ schwach ankommenden Lichtimpulse der anderen Station mit hinreichender Empfindlichkeit empfangen kann. Die Erholzeit eines großflächigen Lichtempfängers kann mehrere µs betragen, beispielsweise 5 µs. Dies bedeutet, daß ein Lichtempfänger nicht mit hinreichender Sicherheit Lichtimpulse empfangen kann, die in einem Zeitraum von 5 µs nach dem Aussenden eines Lichtimpulses eintreffen.

Um auf der Signalstrecke einen Duplex-Verkehr durchführen zu können, werden die elektrischen Signalimpulse jeweils in eine Vielzahl von kurzen Lichtimpulsen zerhackt, wobei die Folgefrequenz der Lichtimpulse ein Vielfaches der Signalfrequenz beträgt. Auf diese Weise können gleichzeitig Signale in beiden Richtungen übertragen werden, wenn die Lichtimpulse sehr kurz sind und sich nicht gegenseitig überlappen.

Der Erfindung liegt die Aufgabe zugrunde, ein Datenübertragungssystem zu schaffen, bei dem zwei Stationen über eine optische Signalstrecke im Duplex-Verkehr miteinander kommunizieren können, ohne daß ein Signalverlust durch Blendung des optischen Empfängers durch den optischen Sender derselben Station eintritt.

Die Lösung dieser Aufgabe erfolgt erfindungsgemäß mit den im Patentanspruch 1 angegebenen Merkmalen.

Bei dem erfindungsgemäßen Datenübertragungssystem wird, wenn an einer Station ein Lichtimpuls empfangen wurde, das Aussenden des nächstfolgenden Lichtimpulses um eine Wartezeit verzögert. Dadurch ist sichergestellt, daß in einer Station nach dem Empfangen eines Lichtimpulses eine Wartezeit verstreicht, bis diese Station das Senden beginnen oder fortsetzen kann. Dies bedeutet, daß an der anderen Station nach dem Aussenden eines Lichtimpulses ein zu empfangender Lichtimpuls erst nach Ablauf der Wartezeit eintrifft.

Die Erfindung geht davon aus, daß normalerweise beide Stationen Lichtsignale mit jeweils einer stationsgebundenen Eigenfrequenz aussenden. Würden die Lichtsignale mit den jeweiligen Eigenfrequenzen zu beliebigen Zeitpunkten ausgesandt werden, dann könnte es vorkommen, daß mehrere aufeinanderfolgende Lichtimpulse nicht empfangen werden können, weil in derselben Station jeweils kurz vor oder zeitgleich mit diesen Empfangsimpulsen Sendeimpulse ausgesendet wurden, die den betreffenden optischen Empfänger blindgemacht haben. Es wären daher Situationen möglich, in denen das zu übermittelnde Signal-Telegramm vollständig verstümmelt würde. Erfindungsgemäß ist nun vorgesehen, daß in dem Fall, daß Sende- und Empfangsimpulse an einer Station in kurzen zeitlichen Abständen auftreten, nach jedem Empfangsimpuls eine Wartezeit eingehalten wird, bevor der nächste Sendeimpuls eintritt. Dies hat zur Folge, daß bei der gegenüberliegenden Station ein zeitgleiches oder zeitnahes Auftreten von Sende- und Empfangsimpulsen verhindert wird.

Die Wartezeiten der einzelnen Stationen sind vorzugsweise gleich, obwohl sie nicht notwendigerweise gleich sein müssen. Eine Wartezeit liegt vorzugsweise in der Größenordnung einer halben Periodendauer der kleinsten Eigenfrequenz, mit der eine der beteiligten Stationen Lichtimpulse aussendet, wenn sie als alleinige Station sendet. Durch diese Bemessung der Wartezeit wird erreicht, daß in dem Fall, daß beide Stationen Lichtimpulse senden, diese Lichtimpulse alternierend ausgesandt werden, wobei die Lichtimpulse der einen Station jeweils genau in die Mitte der Lücke zwischen den Lichtimpulsen der anderen Station fallen.

Generell ergibt sich in dem Fall, daß beide Stationen einen bidirektionalen Datenverkehr zeitgleich ausführen eine Impulsfolgefrequenz, deren Periodendauer der Summe der Wartezeiten beider Stationen entspricht. Diese Periodendauer ist vorzugsweise gleich der Periodendauer der kleinsten Eigenfrequenz der beiden Stationen.

In jedem Fall sollten sich die Eigenfrequenzen der beiden Stationen voneinander unterscheiden. Hierbei kann es zwar in seltenen Fällen vorkommen, daß bei Beginn des Aussendens von Lichtimpulsen der erste Lichtimpuls einer Station mit einem ersten Lichtimpuls der anderen Station exakt zusammenfällt, wobei die zeitliche Staffelung der Impulsfolgen noch nicht wirksam ist, jedoch beschränkt sich dieses zufällige Zusammenfallen auf jeweils einen einzigen (den ersten) Lichtimpuls. Bei den nachfolgenden Lichtimpulsen ist wegen der unterschiedlichen Eigenfrequenzen die zeitliche Koinzidenz der Lichtimpulse nicht mehr gegeben, so daß hier die zeitliche Staffelung bereits wirksam wird und die Impulse jeweils eine halbe Periodendauer gegeneinander versetzt werden.

Gemäß einer bevorzugten Weiterbildung der Erfindung enthält jede Station eine Unterdrückungsstufe, die beim Senden eines Lichtimpulses das Empfangssignal unterdrückt. Dadurch wird sichergestellt, daß in jeder Station nur diejenigen Empfangssignale ausgewertet werden, die nicht zeitgleich mit einem Sendeimpuls anstehen. Die von derselben Station erzeugten Lichtimpulse werden also aus den Empfangssignalen dieser Station ausgeblendet.

Im folgenden wird unter Bezugnahme auf die Zeichnung ein Ausführungsbeispiel der Erfindung näher erläutert.

Es zeigen:

Fig. 1 ein Blockschaltbild zweier miteinander durch eine optische Signalstrecke verbundene Sende- und Empfangsstationen,

Fig. 2 ein Beispiel für das zeitliche Auftreten von Lichtimpulsen an beiden Stationen, und

Fig. 3 den Zusammenhang zwischen den elektrischen Informationssignalen und den Lichtimpulsen.

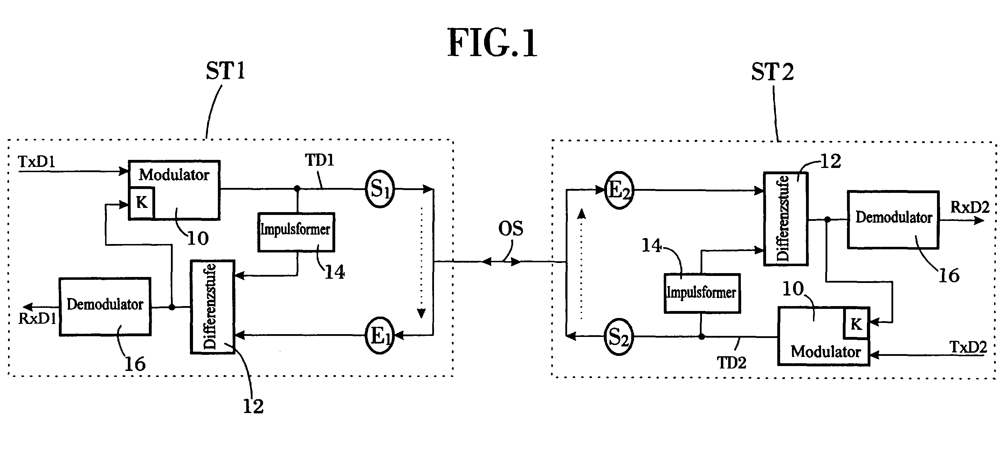

Gemäß Fig. 1 sind zwei identische Sende- und Empfangsstationen ST1, ST2 vorgesehen, die über eine optische Signalstrecke OS miteinander verbunden sind. Die optische Signalstrecke OS besteht hier aus einem Lichtleiterkabel mit einem Lichtleiter.

Jede Station enthält einen Modulator 10, der die ihm zugeführten elektrischen Informationsbits $TxD_1$ bzw. $TxD_2$ in eine Folge elektrischer Impulse $TD_1$ bzw. $TD_2$ umwandelt. Bei den elektrischen Informationsbits $TxD_1$, $TxD_2$ handelt es sich um Nullspannungs-Signale, die beispielsweise von der Station ST1 empfangen werden und die von der Station ST2 weitergeleitet werden, oder umgekehrt. Die Informationsbits können einzeln oder auch, wie dargestellt, zusammenhängend auftreten. Der Modulator 10 der Station ST1 erzeugt bei jedem Informationsbit eine Reihe aufeinanderfolgender elektrischer Impulssginale PS1, die dem Sender S1 zugeführt werden, welcher entsprechende Lichtsignale aussendet. Die Impulssignale PS1 sind kurzzeitige Impulse, deren Dauer wesentlich kleiner ist als die dazwischenliegenden Impulslücken. Die Lichtimpulse werden über die optische Signalstrecke OS übertragen und gelangen in der Station ST2 zu dem Empfänger E2 und anschließend zum Demodulator 16, wo sie in Informationsbits $RxD_2$ verwandelt werden, die den gesendeten Informationsbits $TxD_1$ entsprechen.

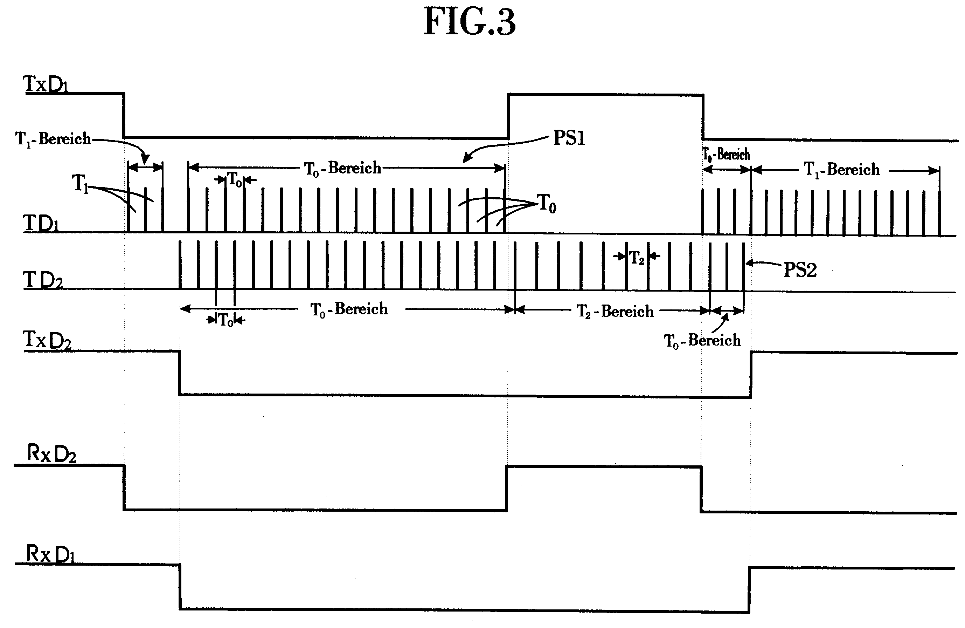

In gleicher Weise werden die Informationsbits $TxD_2$ der Station ST2 in Impulssignale PS2 verwandelt, die dann als Lichtimpulse ausgesendet und in der Station ST2 in Informationsbits $RxD_1$ zurückverwandelt werden. Bei dem in Fig. 3 dargestellten Beispiel ist angenommen, daß jeweils mehrere Informationsbits in direkter Folge aneinander anschließen.

Wenn der Sender S1 einen Lichtimpuls aussendet, gelangt nur ein Teil des Lichts in die optische Signalstrecke OS. Ein großer Teil des Lichts gelangt unbeabsichtigt zu dem Empfänger E1, der daraufhin ein elektrisches Signal erzeugt. Zum Austasten dieses von Licht des Senders S1 erzeugten Signals ist eine Unterdrückungsstufe 12 vorgesehen. Die Unterdrückungsstufe 12 ist eine digitale Differenzierstufe, die am positiven Eingang das Signal des Empfängers E1 empfängt und am negativen Eingang das Ausgangssignal einer Impulsformerstufe 14, deren Eingang an den Ausgang des Modulators 10 angeschlossen ist. Bei jedem Sendeimpuls des Signals $TD_1$ erzeugt der Impulsformer 14 einen etwas breiteren Impuls, der der Differenzierstufe 12 zugeführt wird. Auf diese Weise werden diejenigen Signale des Empfängers E1, die auf Sendesignale des Senders S1 zurückgehen, eliminiert. Der Ausgang der Unterdrückungsstufe 12 ist mit einem Demodulator 16 verbunden, der das Signal $RxD_1$ erzeugt, das dem gesendeten Signal $TxD_2$ entspricht. Dem Demodulator 16 der Station ST1 werden also nur solche Signale zugeführt, die von der Station ST2 ausgesandt wurden. Wenn durch Zufall zwei Lichtimpulse von beiden Stationen zeitgleich ausgesandt werden, werden sie in den empfangenden Stationen ausgetastet. Dies ist jedoch bei maximal einem einzigen Impuls einer Impulsfolge möglich.

Das Ausgangssignal der Unterdrückungsstufe 12 wird einer Kippstufe K zugeführt, die bewirkt, daß der nächste vom Modulator 10 ausgegebene Impuls nicht früher als nach Ablauf einer Wartezeit $\tau_1$ ausgesandt werden kann.

In gleicher Weise ist in der Station ST2 im Modulator eine Kippstufe K enthalten, die beim Eintreffen eines Eingangssignals bewirkt, daß der nächste Impuls des Signals $TD_2$ nicht früher als nach Ablauf einer Wartezeit $\tau_2$ ausgesandt werden kann.

Wenn nur die Station ST1 Lichtimpulse aussendet, geschieht dies mit einer Eigenfrequenz, die der Periodendauer $T_1$ entspricht. Sendet nur die Station ST2 Lichtimpulse aus, so werden diese Lichtimpulse mit einer Eigenfrequenz ausgesandt, die der Periodendauer $T_2$ entspricht. Bei dem vorliegenden Ausführungsbeispiel sei angenommen, daß T1 = 8 μs und T2 = 10 μs beträgt. Ferner gilt $\tau_1 = \tau_2 = 5\ \mu s$.

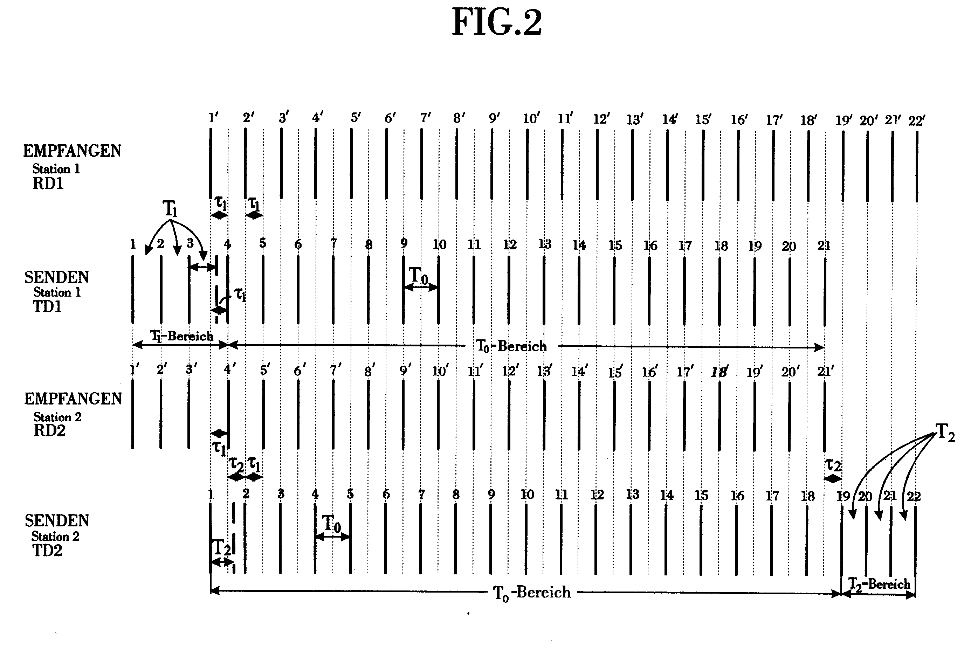

In Fig. 2 ist angenommen, daß die Station ST1 die Lichtimpulse 1,2,3 aussendet, während die Station ST2 noch keine Lichtimpulse aussendet. Die Lichtimpulse werden dann von der Station ST1 mit der Periodendauer T1 ausgesandt und als Lichtimpulse 1',2',3' von der Station ST2 empfangen.

Der erste Sendeimpuls 1 der Station ST2 wird in der Station ST1 als Impuls 1' empfangen, wodurch über die Kippstufe K der nächstfolgende Sendeimpuls 4 in der Station ST1 um die Wartezeit $\tau_1$ verzögert wird. In der Station ST1 wird also der Impuls 4 nicht an derjenigen Zeitposition erzeugt, an der er normalerweise auftreten müßte, sondern er wird nach dem Empfang des Impulses 1' um die Wartezeit $\tau_1$ verzögert.

In der Station ST2 sperrt der um $\tau_1$ versetzt empfangene Impuls 4' den nächsten Sendeimpuls 2' um die Wartezeit $\tau_2$ der Station ST2. Der zweite Impuls 2 wird also so lange verzögert, bis nach dem Impuls 4' die Wartezeit $\tau_2$ verstrichen ist.

Auf diese Weise entstehen, wenn beide Stationen gleichzeitig senden und empfangen, Impulssignale mit einer Frequenz, die der Periodendauer $T_0$ entspricht, wobei $T_0 = \tau_1 + \tau_2$ ist. Bei dem vorliegenden Ausführungsbeispiel ist $T_0$ = 10 μs. Die Impulsfolgefrequenz $T_0^{-1}$ ist also kleiner als die Eigenfrequenz der Station ST1 und gleich der Eigenfrequenz der Station ST2. In jedem Fall sollte die Impulsfolgefrequenz $T_0^{-1}$ gleich oder kleiner als die Eigenfrequenz jeder Station sein, wobei die Eigenfrequenzen der beiden Stationen unterschiedlich sind.

Wenn die Station ST2 nicht sendet, überträgt die Station ST1 impulsmodulierte Informationsbits $TD_1$ des Sendesignals $TxD_1$ mit einer Periodendauer $T_1$. Wenn die Station ST1 nicht sendet, überträgt die Station ST2 impulsmodulierte Informationsbits $TD_2$ des Sendesignals $TxD_2$ mit der Periodendauer $T_2$.

Wie Fig. 2 zeigt, werden die Impulse 1,2,3 von $TD_1$ mit einer Periodendauer $T_1$ zur Station ST2 übertragen und als Impulse 1',2',3' von $RD_2$ (impulsmoduliertes Informationsbit des Empfangssignals) mit der Periodendauer $T_1$ empfangen. Der Impuls 4 von $TD_1$ würde ebenfalls mit $T_1$ gesendet werden (in Fig. 2 gestrichelt dargestellt), jedoch sendet Station ST2 den Impuls von $TD_2$, der von Station ST1 als Impuls 1' empfangen wird und, wenn $T_1$ zum Senden von Impuls 4 noch nicht erreicht ist. Durch die Rückkopplung auf den Modulator erhält der Modulator 10 Sendeverbot für die

Zeit $\tau_1$. Impuls 4 des Signals $TD_1$ wird gegenüber dem Empfang des Impulses 1' mit einer Verzögerung von $\tau_1$ gesendet und als Impuls 4' von RD2 in Station ST2 empfangen. Der Impuls 4 ist gegen- über über dem Impuls 1 also um $\tau_1$ versetzt.

In gleicher Weise erhält der Modulator 10 in der Station ST2 für die Zeit $\tau_2$ Sendeverbot. Dadurch wird der Impuls 2 von $TD_2$ nach einer zeitlichen Lücke $\tau_1 + \tau_2 = T_0$ gesendet und als Impuls 2' von Station ST1 empfangen. Der Impuls 2 ist gegenüber dem Impuls 4 um $\tau_2$ versetzt.

Wenn beide Stationen senden, wird eine konstante Pulsfolgefrequenz mit der Schrittdauer $T_0$ für die beiden Signalpulse $TD_1$ und $TD_2$ gebildet, die gegeneinander um $\tau_1$ bzw. $\tau_2$ versetzt gesendet werden. Im Ausführungsbeispiel ist $\tau_1 = \tau_2$, so daß eine zentrierte zeitversetzte Übertragung erfolgt.

Ab Impuls 21 des Signals $TD_1$ sendet die Station ST1 nicht mehr. Station ST2 sendet dagegen von Impuls 19 bis Impuls 22 mit der Periodendauer $T_2$ der Eigenfrequenz $T_2^{-1}$.

**Patentansprüche**

1. Datenübertragungssystem für impulsmodulierte Informationssignale, mit mindestens zwei Sende- und Empfangsstationen (ST1,ST2), die über eine optische Signalstrecke (OS) miteinander verbunden sind, wobei in jeder Sende- und Empfangsstation ein optischer Sender (S1) und optischer Empfänger (E1) enthalten ist und beide Stationen gleichzeitig einen Duplex-Verkehr miteinander führen können,
**dadurch gekennzeichnet,**
daß in jeder Station (ST1,ST2) bei Empfang eines von der anderen Station kommenden Lichtimpulses der nächste Sendeimpuls so lange verzögert wird, bis seit dem Empfang eine vorbestimmte Wartezeit ($\tau_1$, $\tau_2$) verstrichen ist.

2. Datenübertragungssystem nach Anspruch 1, dadurch gekennzeichnet, daß jede der Stationen (ST1,ST2) Lichtimpulse einer vorgegebenen Eigenfrequenz ($T_1^{-1}, T_2^{-1}$) aussendet, wenn diese Station keine Lichtimpulse empfängt, wobei die Eigenfrequenzen der Stationen unterschiedlich sind.

3. Datenübertragungssystem nach Anspruch 1 oder 2, dadurch gekennzeichnet, daß die Wartezeit ($\tau_1,\tau_2$) wenigstens annähernd gleich der halben Periodendauer der kleinsten der Eigenfrequenzen ist.

4. Datenübertragungssystem nach einem der Ansprüche 1-3, dadurch gekennzeichnet, daß die Wartezeiten ($\tau_1,\tau_2$) der Stationen einander gleich sind.

5. Datenübertragungssystem nach einem der Ansprüche 1-4, dadurch gekennzeichnet, daß jede Station eine Unterdrückungsstufe (12) enthält, die während des Sendens eines Lichtimpulses das Empfangssignal unterdrückt.

6. Sende- und Empfangsstation für ein Datenübertragungssystem nach einem der Ansprüche 1-5, mit einer Verzögerungseinrichtung (K), die im Falle des Empfangens eines Lichtimpulses das Aussenden des nächsten Sendeimpulses so lange verzögert, bis seit dem Empfang eine vorbestimmte Wartezeit ($\tau_1, \tau_2$) verstrichen ist.

FIG.1

FIG.2

# FIG.3